# EUROPEAN PATENT APPLICATION

(11) **EP 4 763 698 A1**
(43) Date of publication of application: **24.06.2026**
(21) Application number: 24383417.3
(22) Date of filing: 19.12.2024
(51) Int. Cl.: B64C 9/02, B64C 9/24, B64C 3/48

(54) **AIRCRAFT HIGH-LIFT DEVICE**

(71) Applicant: AIRBUS OPERATIONS, S.L.U., 28906 Getafe (Madrid) (ES)
(72) Inventor: MURUZABAL SOPELANA, María, 28906 Getafe (ES)
(74) Representative: Elzaburu S.L.P.

(57) **Abstract**

Aircraft high-lift device (1) of a lifting surface (2). The high-lift device (1) comprising a skin comprising an upper skin (3), a lower skin (4) and a nose (5), the high-lift device (1) comprising:
- a flexible skin allowing for a morphing high-lift device (1), having a rear upper edge (7.1) and a rear lower edge (7.2), at least the rear upper edge (7.1) sliding along the chord direction between a retracted position and an extended position,
- a linear actuator (6) connected to the nose (5) and pivotably connected to the lifting surface (2) between the retracted position and the extended position, so that in the extended position the nose (5) is located in a downward location with respect to its location in the retracted position and at least the rear upper edge (7.1) is located in an anterior location with respect to its location in the retracted position.

## Description

### FIELD OF THE INVENTION

The present invention relates to the field of movable high-lift devices in aircraft. More specifically, it relates to leading edge slats and flaps.

### BACKGROUND OF THE INVENTION

A high-lift device is a component or mechanism on an aircraft's lifting surface, for instance a wing, that increases the amount of lift produced by said lifting surface. A lifting surface is any three-dimensional body whose primary purpose is to generate aerodynamic lift. Both, the high-lift device and the lifting surface have a span direction and a chord direction. The span direction is the direction from root to tip of the lifting surface. The chord direction is the imaginary straight line joining the leading edge and trailing edge of the aerofoil.

The size and lifting capacity of a lifting surface is chosen as a compromise between differing requirements. For example, a larger wing will provide more lift and will reduce the distance and speeds required for take-off and landing, but it will increase drag, which reduces performance during the cruising portion of flight. Aircraft lifting surface designs are optimized for speed and efficiency during the cruise portion of flight, since this is where the aircraft spends the vast majority of its flight time. High-lift devices compensate for this design trade-off by adding lift at take-off and landing, reducing the speed and distance required to safely land the aircraft, and allowing the use of a more efficient lifting surface in flight.

Lifting devices are exposed to bird strike damage, among other damages, and have to be easily repairable or interchangeable, so a light, strong and easy to assemble component is sought.

The materials chosen for the structure of the high-lift device are selected to ensure a minimum weight design while retaining the ability to repair damage-prone surfaces. Aluminium alloy is typically used.

Slats are known as high-lift devices located on the leading edge of, for instance, wings of the aircraft. As previously stated, their purpose is to increase lift during low speed operations, such as take-off, initial climb, approach and landing. Slats are actuated in order to increase the wing area and camber during low speed operation of the aircraft. This allows the aircraft to fly at lower speeds and take off and land in a shorter distance.

Two main types of slats are known: fixed and movable. Fixed slats are permanently attached to the lifting surface and remain in a fixed position during flight. Movable slats are able to move outwards in order to increase the lift during low speed operations and to retract during cruise, reducing drag.

In a conventional configuration, the slat kinematics is driven by joints and supported by tracks. Each track is moveable on the wing structure between a fully extended position and a stowed position. In the retracted position the slat track is housed in a track can, mounted on the inner face of the wing front spar.

The main disadvantages of the above movable high-lift device configuration are:
- There is a gap between the high-lift device and the lifting surface leading edge that increases the drag during cruise conditions. Said gap is even increased when the high-lift device is extended as there is a discontinuity in the upper surface of the leading edge. In addition, the aforementioned gap generates considerable noise.
- On a wing, the tracks enter into the fuel tank area, thus they need to be housed in the lifting surface front spar. This housing affects the torsion box, which is a primary structure of the lifting surface, and it requires a reinforcement of the spar due to this discontinuity.

Morphing technology is also known to be applied to the leading edge of a lifting surface. Morphing is used in order to achieve a flexible large-displacement leading edge. It is also known as a droop nose.

Morphing allows a part of the structure, for instance, the nose to change shape during take-off and landing so that there is no need for separate slats, and therefore, no gap exists, decreasing the drag associated.

Morphing structures also have some disadvantages:
- The total chord length of the lifting surface is not modified, only the leading edge angle, decreasing the lift generated.
- A very elastic material is needed to deform the nose, which requires internal reinforcements and structures to maintain the desired shape.

### SUMMARY OF THE INVENTION

It is an object of the claimed invention an aircraft high-lift device of a lifting surface.

The high-lift device comprises a skin, i.e., the outer surface covering that provides an aerodynamic shape. Said skin comprises an upper skin, a lower skin and a nose. The upper skin is the portion of the skin located on the suction surface or 'extrados' of the high-lift aerofoil. The lower skin is the portion of the skin located on the pressure surface or 'intrados'. The nose corresponds with the leading-edge shape of the high-lift device.

The high-lift device object of the invention comprises:
- A flexible skin configured to allow for a morphing high-lift device. Thus, the skin is of the kind that is capable of bending continuously without breaking. A morphing structure is one that can adaptively regulate its aerodynamic layout to meet the demands of varying flight conditions. The flexible skin has a rear upper edge and a rear lower edge. The rear edge is the edge of the skin furthest away from the nose. At least the rear upper edge is configured to slide along the chord direction between a retracted position and an extended position. Thus, the rear upper edge is movable in the chord direction. The extended position is the position in which the camber and the lift are increased. The retracted position is the position that implies drawing back from the extended position.
- A linear actuator connected to the nose and configured to be pivotably connected to the lifting surface between the retracted position and the extended position. In the extended position, the linear actuator is configured so as to the nose is located in a downward location with respect to its location the retracted position. And also at least the rear upper edge is configured to be located in an anterior location with respect to its location in the retracted position to increase the lift of the lifting surface. Anterior is understood as in a leading position with respect to the chord direction. According to the above, the linear actuator is connected, or in other words, linked together in some way, either directly or through an intermediate connector, to the nose and to the lifting surface.

The linear actuator comprises an anterior end and a posterior end. In an embodiment, the anterior end is connected to the nose. The posterior end is configured to be connected to the lifting surface. The linear actuator is located within the flexible skin.

According to the above, the linear actuator is configured to be:
∘ extendable along the linear axis of the linear actuator, therefore it can be made longer or shorter,
∘ pivotable with respect to the lifting surface. In an embodiment it is pivotable with respect to the posterior end of the linear actuator around an axis located in the span direction passing through this posterior end. The linear actuator is pivotable between a retracted position and an extended position. In the retracted position the linear actuator is located in an upper position, corresponding to a cruise position. In the extended position the nose is located in a downward position with respect to the retracted position and at least the rear upper edge is configured to be movable towards an anterior position with respect to its retracted position to increase the lift of the lifting surface.

Upper and downward are referenced with respect to the ground in an operating position.

According to the above, the claimed invention provides an alternative for the known high-lift devices. It uses a combination of morphing technology in order to maintain the aerodynamic surface's continuity and extendable elements in order to increase the chordal length to reduce drag when the high-lifting devices are extended. The claimed invention leads to a decrease in fuel consumption and an increase in efficiency of the aircraft.

In an embodiment, the flexible skin extends continuously between the rear upper edge and the rear lower edge. At least the rear upper edge is free to slide along the chord direction. Its movement is not restricted in the chord direction, for instance, by being mechanically joined to the skin of the lifting surface. According to the above, said edges are slidable with respect to the skin of the lifting surface. The upper skin is partly sheltered into the lifting surface at its rear part, and it will slide out when the high-lift device is extended, increasing the lifting surface area.

As previously stated, the linear actuator is connected to the nose. When the actuator extends, the upper skin slides forward, and the high-lift device will deform into a droop nose shape.

According to the above, the claimed invention minimises the disadvantages of the known high-lift devices:
- The combination between the morphing structure and the slidable rear upper edge reduces the gap between the high-lift device and the lifting surface and also avoids the need of tracks inside the lifting surface. Therefore, the gap is minimised, and the drag and noise are reduced.
- The slidable rear upper edge end allows a sliding upper surface which enables the high-lift device to increase the leading edge surface. As the upper surface of the high-lift device is not fixed and can slide out of the leading edge of the lifting surface, the whole lifting surface can be modified, increasing the lift generation.
- The assembly of the high-lift device is simple, with a reduced number of internal elements, and easy to change or repair, reducing maintainability costs.
- The claimed device is lighter than the known solutions as does not need actuators or guides.

It is also an object of the present invention a lifting surface comprising an aircraft high-lift device according to the above described.

It is also an object of the present invention, an aircraft comprising a lifting surface according to the above.

### DESCRIPTION OF THE FIGURES

To complete the description and to provide for a better understanding of the invention, drawings are provided. Said drawings form an integral part of the description and illustrate preferred embodiments of the invention. The drawings comprise the following figures.
Figures 1a and 1b show a schematic lateral representation of a portion of the lifting surface and an embodiment of the high-lift device in a retracted position, figure 1a, and in a extended position, figure 1b.
Figure 2 shows a schematic lateral representation of an embodiment of the high-lift device rear upper edge and a portion of the skin of the annexed lifting surface in a retracted position and in an extended position.
Figure 3 shows a schematic lateral representation and a perspective representation of an embodiment of the rear upper edge and a portion of the skin of the annexed lifting surface.
Figure 4 shows a lateral view of a lifting surface and of a high-lift device according to an embodiment of the invention.
Figure 5 shows a lateral view of an aircraft.

### DETAILED DESCRIPTION OF THE INVENTION

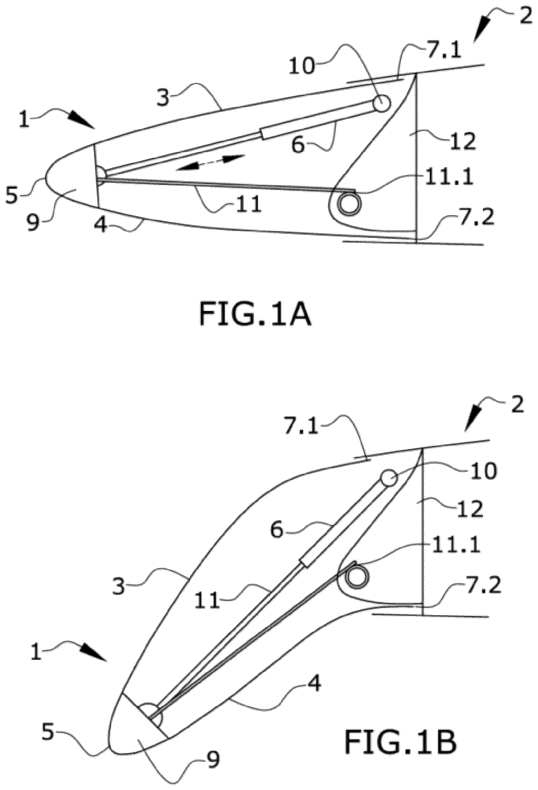

Figures 1a and 1b show a schematic lateral representation of an embodiment of the high-lift device (1) in a retracted position, figure 1a, and in an extended position, figure 1b, and it also shows a portion of the annexed lifting surface (2).

The aircraft high-lift device (1) comprises a skin comprising an upper skin (3), a lower skin (4) and a nose (5). The skin (3) has a rear upper edge (7.1) and a rear lower edge (7.2). At least the rear upper edge (7.1) being configured to slide along the chord direction between a retracted position and an extended position, so that it can freely slide with respect to the lifting surface (2).

The skin (3) is a flexible skin configured to allow a morphing high-lift device (1). The flexible skin (3) can be manufactured from aluminium or composite material.

The high-lift device (1) also comprises a linear actuator (6) having an anterior end and a posterior end (10). The anterior end is connected to the nose (5). The posterior end (10) is connected to the lifting surface (2).

The linear actuator (6) is extendable along its linear axis. It is pivotable with respect to the lifting surface (2). In an embodiment, it is pivotable with respect to the posterior end (10) around an axis in the span direction. The linear actuator (6) is movable between a retracted position and an extended position.

In the retracted position the linear actuator (6) is located in an upper position. In the extended position the linear actuator (6) is extended and its nose (5) is located in a downward position with respect to its location in the retracted position. The rear upper edge (7.1) is moved towards an anterior position with respect to its location in the retracted position so that the lift of the lifting surface (2) is increased.

In the shown embodiment, the high-lift device (1) comprises a rib (9) located in the nose (5) in a chord direction. The rib (9) helps to impart the required shape to the high-lift device (1) nose (5) as the skin adopts the rib (9) shape when stretched over it. The rib (9) maintains the shape of the leading edge with minimal internal structure so that the high-lift device (1) requires less internal reinforcement, and it reduces the weight and cost of the claimed invention. The rib (9) allows to reduce the number of reinforcements in order to maintain the high-lift device (1) shape, using only the small rib (9) reinforcement. The rib (3) has a longitudinal direction, its longitudinal direction coincides with the chord direction.

In the shown embodiment, the anterior end of the linear actuator (6) is joined to the rib (9). Thus, they are directly attached.

In the embodiment shown in figures 1, the high-lift device (1) in addition comprises a rod (11) connected to the nose (5) and configured to be pivotably connected to the lifting surface (2).

The rod (11) has an anterior end connected to the nose (5) and a posterior end (11.1) connected to the lifting surface (2). In an embodiment, the rod (11) is pivotable with respect to the posterior end (11.1) around an axis in the span direction between the retracted position and the extended position. The rod (11) would act as a guide for the upper skin (3) in collaboration with the linear actuator (6) to go back to its initial position when the retraction is performed.

In the shown embodiment, the anterior end of the rod (11) is joined to the nose rib (9).

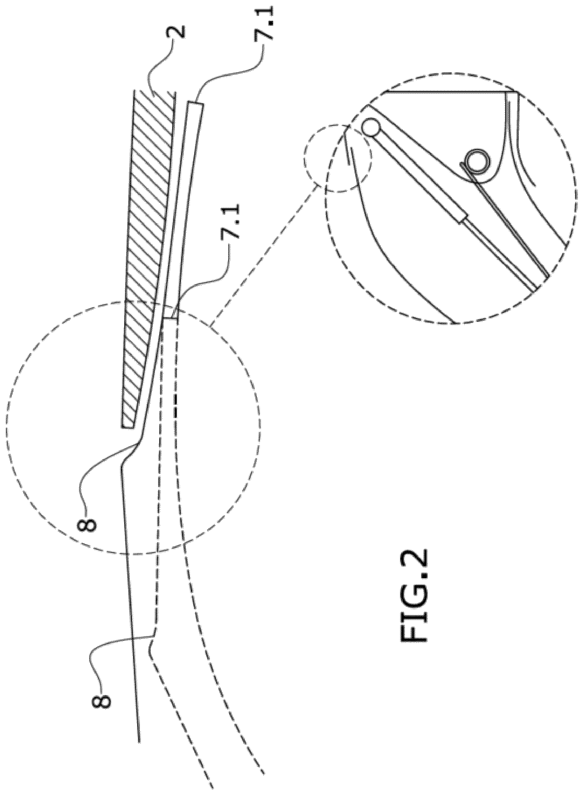

Figures 1 and, more specifically, figure 2 show the upper skin (3) comprising a step (8), a discontinuity in the width of the upper skin (3), in the chord direction. The step (8) being configured to be annexed to a forward end of the skin of the lifting surface (2) in the retracted position so that the skin of the high-lift device (1) and the skin of the lifting surface (2) are flush, i.e., having or forming a continuous plane or unbroken surface. Thus, there is no gap in height between the high-lift device (1) and the lifting surface (2). The step (8) allows the upper skin (3) to be at least partly located under the lifting surface (2) in the retracted position. Under the lifting surface (2) is understood considering a reference with respect to the ground in an operating position.

In addition, the area of the upper skin (3) between the step (8) and the rear upper edge (7.1) in the chord direction is tapered. It helps to decrease gaps between the high-lift device (1) and the lifting surface (2). It also smooths the sliding movement of the upper skin (3).

Moreover, in an embodiment both interface surfaces, of the high-lift device (1) and of the lifting surface (2) are tapered in order to maintain the smallest step possible when the high-lift device (1) is extended.

The lower skin (4) can be fixed or use the same solution as the upper skin (3). Thus, in an embodiment, the lower skin (4) comprises a step in the chord direction. The step is configured to be annexed to a forward end of the skin of the lifting surface (2) in the retracted position so that the skin of the high-lift device (1) and the skin of the lifting surface (2) are flush. In addition, the rear edge area between the step and the rear edge is configured to be at least partly located, with respect to the surrounding airflow, under the lifting surface (2) in the retracted position and in the extended position so that there is no gap in the chord direction between the high-lift device (1) the lifting surface (2).

According to the above, the rear upper edge (7.1) of the high-lift device (1) is configured to slide along the chord direction with respect to the lifting surface (2) between a retracted position and an extended position. More specifically, the rear upper edge (7.1) is configured to be movable towards an anterior position with respect to the lifting surface (2). More particularly, the rear upper edge (7.1) is configured to be located under the lifting surface skin (2) both in the retracted position and in the extended position.

In the shown embodiment, the lifting surface (2) comprises a spar (12) located in the span direction annexed, i.e., in proximity to the high-lift device (1). In an embodiment, this spar (12) is the front spar of the lifting surface (2).

In the shown embodiment, the linear actuator (6) is pivotably joined to the spar (12). More specifically, the linear actuator (6) is located on the upper area of the spar (12).

In addition, the rod (11) is pivotably joined to the spar (12). The rod (12) is located on the lower area of the spar (12). Thus, the linear actuator (6) and the rod (11) are joined to different heights to the lifting surface (2), more specifically, to the spar (12). It promotes rotation of the nose (5).

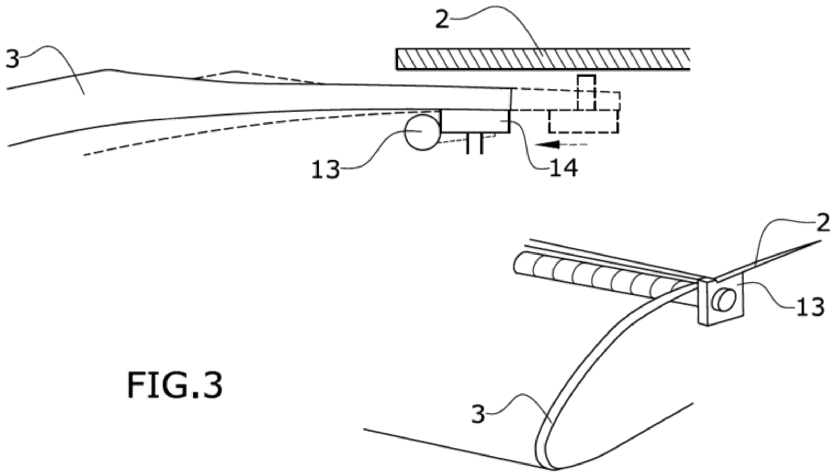

Figure 3 shows that the lifting surface (2) and the high-lift device (1) comprise a stopper assembly. The upper skin (3) comprises at its rear upper edge (7.1) a protrusion (14) and the lifting surface (2) comprises a retainer (13). The retainer (13) and the protrusion (14) are configured to contact each other to prevent the upper skin (3) from slipping off the lifting surface (2) in the chord direction in the extended position. Therefore, in order to prevent the upper skin (3) from stepping out of the lifting surface (2), a mechanical stopper is located. In an embodiment, it may consist of a bar fixed to the lifting surface (2) as a retainer (13) and a protrusion (14) located on the edges of the high-lift device (1) along the whole span.

In the shown embodiment, the protrusion (14) and the retainer (13) are configured to be located under the lifting surface (2) skin with respect to the surrounding airflow both in the retracted position and in the extended position.

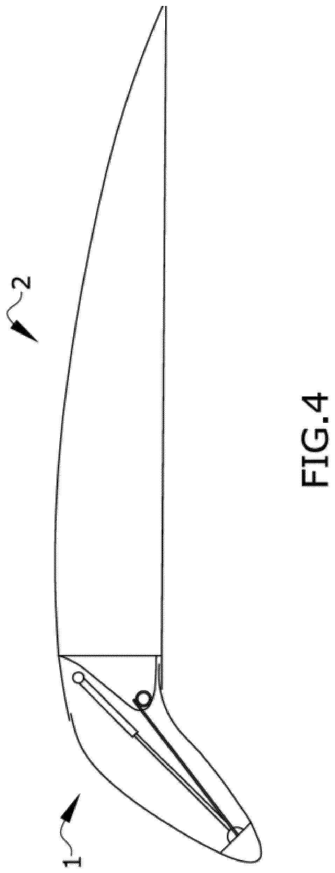

Figure 4 shows a lateral view of a lifting surface comprising a high-lift device (1) according to the above described.

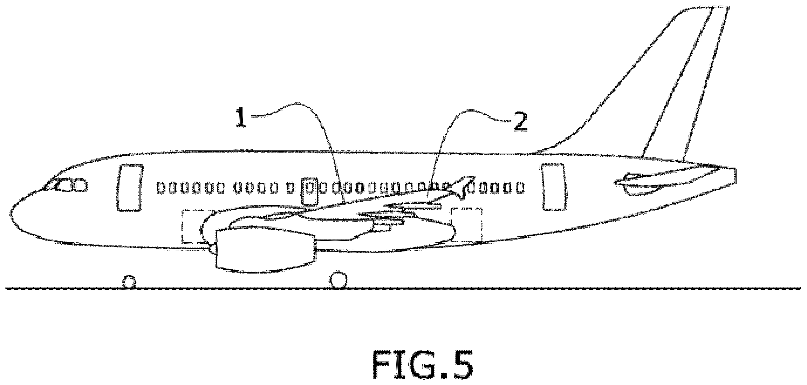

Figure 5 shows a lateral view of an aircraft comprising a lifting surface according to the above described.

## Claims

1. Aircraft high-lift device (1) of a lifting surface (2), the high-lift device (1) and the lifting surface (2) having a chord direction and a span direction, the high-lift device (1) comprising a skin comprising an upper skin (3), a lower skin (4) and a nose (5), the high-lift device (1) **characterised in that** it further comprises:
- a flexible skin configured to allow for a morphing high-lift device (1), the flexible skin having a rear upper edge (7.1) and a rear lower edge (7.2), at least the rear upper edge (7.1) being configured to slide along the chord direction between a retracted position and an extended position,
- a linear actuator (6) connected to the nose (5) and configured to be pivotably connected to the lifting surface (2) between the retracted position and the extended position, so that in the extended position the nose (5) is configured to be located in a downward location with respect to its location in the retracted position and at least the rear upper edge (7.1) is configured to be located in an anterior location with respect to its location in the retracted position to increase the lift of the lifting surface (2).

2. Aircraft high-lift device (1), according to claim 1, wherein the linear actuator (6) comprises an anterior end and a posterior end (10), the linear actuator (6) being pivotable with respect to the posterior end (10) around an axis in the span direction of the high-lift device (1).

3. Aircraft high-lift device (1), according to any preceding claim, wherein it comprises a rib (9) located in the nose (5) in a chord direction.

4. Aircraft high-lift device (1), according to claim 3, wherein the linear actuator (6) is joined to the rib (9).

5. Aircraft high-lift device (1), according to any preceding claim, wherein it comprises a rod (11) connected to the nose (5) and configured to be pivotably connected to the lifting surface (2).

6. Aircraft high-lift device (1), according to claims 3 and 5, wherein the rod (11) is joined to the rib (9).

7. Aircraft high-lift device (1), according to any preceding claim, wherein the upper skin (3) comprises a step (8) in the chord direction, the step (8) configured to be annexed to a forward end of the skin of the lifting surface (2) in the retracted position so that the skin of the high-lift device (1) and the skin of the lifting surface (2) are flush.

8. Aircraft high-lift device (1), according to claim 7, wherein the area of the upper skin (3) between the step (8) and the rear upper edge (7.1) in the chord direction is tapered.

9. Aircraft high-lift device (1), according to claim 7 or 8, wherein the lower skin (4) comprises a step in the chord direction, the step configured to be annexed to a forward end of the skin of the lifting surface (2) in the retracted position so that the skin of the high-lift device (1) and the skin of the lifting surface (2) are flush.

10. Lifting surface (2), **characterised in that** it comprises at least an aircraft high-lift device (1) according to any preceding claim, wherein the rear upper edge (7.1) is configured to slide along the chord direction with respect to the lifting surface (2) between a retracted position and an extended position.

11. Lifting surface (2), according to claim 10, wherein the rear upper edge (7.1) is configured to be located under the lifting surface (2) skin with respect to the surrounding airflow both in the retracted position and in the extended position.

12. Lifting surface (2), according to claim 10 or 11, wherein it comprises a spar (12) located in the span direction annexed to the high-lift device (1), the linear actuator (6) being pivotably joined to the spar (12).

13. Lifting surface (2), according to claim 12, wherein the rod (11) is pivotably joined to the spar (12).

14. Lifting surface (2), according to any preceding claim 10 to 13, wherein the upper skin (3) of the high-lift device (1) comprises at its rear upper edge (7.1) a protrusion (14) and the lifting surface (2) comprises a retainer (13), the retainer (13) and the protrusion (14) being configured to contact each other to prevent the upper skin (3) from slipping off the lifting surface (2) in the chord direction in the extended position.

15. Aircraft, **characterised in that** it comprises a lifting surface (2) according to any preceding claim 10 to 14.
